Europäisches Patentamt

(19) European Patent Office

Office européen des brevets

(11) EP 0 847 122 A2

## (12) EUROPEAN PATENT APPLICATION

(43) Date of publication:
10.06.1998 Bulletin 1998/24

(51) Int. Cl.$^6$: H02H 7/08, H02H 3/093

(21) Application number: 97121322.8

(22) Date of filing: 04.12.1997

(84) Designated Contracting States:
AT BE CH DE DK ES FI FR GB GR IE IT LI LU MC NL PT SE
Designated Extension States:
AL LT LV MK RO SI

(30) Priority: 04.12.1996 US 753972

(71) Applicant: EATON CORPORATION
Cleveland, Ohio 44114-2584 (US)

(72) Inventor: Blakely, John Herman
Asheville, North Carolina 28803-9548 (US)

(74) Representative:
Wagner, Karl H., Dipl.-Ing.
WAGNER & GEYER
Patentanwälte
Gewürzmühlstrasse 5
80538 München (DE)

(54) **Two time constant thermal protection in electrical switching apparatus**

(57) A motor starter (64) for an electrical circuit includes separable contacts (M2,M3,M4) for switching an electrical current flowing between a power source (12) and a motor (14); an operating mechanism (16) responsive to a trip signal (T) for opening and closing the separable contacts (M2,M3,M4); a current transformer (CT1,CT2,CT3;72) sensing the electrical current flowing between the power source (12) and the motor (14) and providing a sensed current value (I); and an overload relay (U1,83;10") generating the trip signal (T) as an $I^2t$ function of the sensed current value (I), a first time consant ($\tau_1$) and a second time constant ($\tau_2$). The overload relay (U1,83;10") provides a trip curve (112) employing the two time constants ($\tau_1,\tau_2$) which closely models the thermal impedance of the motor (14) such as a European Design N motor, a Design E motor, or any motor which requires a two time constant motor protection curve.

FIG.1

## Description

### BACKGROUND OF THE INVENTION

#### Field of the Invention

This invention relates to a load protection circuit in an electrical switching apparatus and, more particularly, to an overload relay, for a load such as a motor, used in motor starters, motor controllers, and other load controllers.

#### Background Information

Electrical switching devices include, for example, circuit switching devices and circuit interrupters such as contactors, motor starters, motor controllers, lighting controllers, other load controllers, circuit breakers and other electromechanical switching devices used for controlling a variety of electrical loads. Electromagnetic contactors, for example, include a plurality of movable electrical contacts which are brought into contact with a plurality of fixed electrical contacts to close the contactor. The movable electrical contacts are separated from the fixed contacts to open the contactor. Examples of contactors are disclosed in U.S. Patent Numbers 4,760,364; and 4,766,273.

A common type of starter for loads such as motors, lighting, and the like, comprises an electromagnetic contactor with an overload relay. In a motor starter, for example, the purpose of the overload relay is to estimate the heat produced in the motor by line current and "trip" or stop the motor if the retained heat exceeds an acceptable level. The overload relay monitors the load current and trips the contactor open if a persistent overcurrent condition exists. Typically, the overload relay tracks an $I^2t$ characteristic of the load current which is a measure of heating. An example of an overlad relay is disclosed in U.S. Patent Number 4,528,539.

Today, it is common for the overload relay to contain a microprocessor which digitally generates the $I^2t$ characteristic. An example of an overload relay incorporating a microprocessor is disclosed in U.S. Patent Number 5,222,009.

Typically, in overload relays employing the $I^2t$ characteristic, an $I^2t$ value is calculated from a sensed load current value $I$ for a fixed time $t$. If the calculated $I^2t$ value is less than an accumulated $I^2t$ value, then the accumulated $I^2t$ value is updated by subtracting a cooling adjustment, which reflects cooling of the load, from the previously calculated accumulated $I^2t$ value. On the other hand, if the calculated $I^2t$ value is greater than or equal to the accumulated $I^2t$ value, then the accumulated $I^2t$ value is updated by adding a heating adjustment, which reflects heating of the load, to the previously calculated accumulated $I^2t$ value. When the accumulated $I^2t$ value reaches a trip level, the contactor is tripped open to interrupt the flow of current to the load.

For example, in an analog or digital thermal protection circuit of an overload relay, the thermal characteristic is modeled by a single thermal mass term associated with integration of heat of the load, and a single dissipation term associated with cooling of the load. The thermal mass term and the dissipation term combine to form a thermal time constant. In the analog model of the thermal characteristic, for example, the thermal mass may be represented electrically with a capacitor and the thermal dissipation or cooling term may be represented electrically with a resistor shunting the capacitor. Heat input to the load is analogous to a current source. Temperature rise is represented by the voltage developed across the capacitor as charged by current from the current source. In other words, the "heat input" from the current source less the "cooling" by the resistor is integrated by the capacitor.

In motors, for example, during startup, there is a relatively high startup current, which is typically many times rated motor current, until the motor reaches a constant speed. This high current must be permitted by the overload relay in order to start the motor. On the other hand, after startup, such relatively high current may cause thermal damage to the motor and, hence, appropriate protection of the motor is essential to its reliable operation. If the motor stalls and the actual motor current exceeds the rated motor current for a period of time, then power must be removed from the motor to obviate damage.

Known thermal overload relays are designed in various classes such as Classes 10, 20 and 30. In this system, the specific class is defined as the time in seconds for the load to operate at six times rated load current. However, such known thermal overloads are not specifically designed for European Design N motors, or Design E or premium efficiency motors. See, e.g., Revelt, J., "Don't Let The New Design E Motor Throw You A Curve," Electrical Construction & Maintenance, pp. 31-32 and 34, March 1996.

Some users typically employ a Class 20 overload relay to meet the requirements of the Design E motor. The trip curves (i.e., trip time versus multiple of rated load current) for the Class 20 overload relay and the Design E motor are about the same for less than about two times rated load current. Nevertheless, such overload relay does not provide optimal starting capacity for the requirements of the Design E motor. For example, during periods of heavy overload, such as starting, the current for the Design E motor will be about eight times rated load current as compared to about six times rated load current for a conventional Design B motor. A European Design N motor provides an analogous problem. Therefore, nuisance tripping is likely to occur with systems that must start under a relatively large load, such as the starting current of a Design E motor or a European Design N motor. Hence, there is room for improvement.

## SUMMARY OF THE INVENTION

The present invention is directed to a motor starter for an electrical circuit including separable contact means for switching an electrical current flowing between a power source and a load; operating means responsive to a trip signal for opening and closing the separable contact means; means for sensing the electrical current flowing between the power source and the load and providing a sensed current value therefrom; and overload relay means for generating the trip signal as a function of the sensed current value, a first time constant and a second time constant.

As another aspect of the invention, a motor starter for an electrical circuit includes electrical contactor means having separable contact means for switching an electrical current flowing between a power source and a load, and operating means responsive to a trip signal for opening and closing the separable contact means; means for sensing the electrical current flowing between the power source and the load and providing a sensed current value therefrom; and overload relay means for generating the trip signal as a function of the sensed current value, a first time constant and a second time constant.

As a further aspect of the invention, an electrical switching apparatus for an electrical circuit includes separable contact means for switching an electrical current flowing between a power source and a load; means responsive to a trip signal for moving the separable contact means from a closed position to an open position thereof; means for sensing the electrical current flowing between the power source and the load and providing a sensed current value therefrom; and means for generating the trip signal as a function of the sensed current value, a first time constant and a second time constant.

## BRIEF DESCRIPTION OF THE DRAWINGS

A full understanding of the invention can be gained from the following description of the preferred embodiment when read in conjunction with the accompanying drawings in which:

Figure 1 is a block diagram of a three-phase motor and motor control circuit including an overload relay protection circuit in accordance with the invention;

Figure 2 is a functional block diagram of an embodiment of the overload relay protection circuit of Figure 1;

Figure 3 is a schematic circuit diagram partially in block diagram form of another embodiment of an overload relay protection circuit in accordance with the invention;

Figure 4 is a flowchart of a routine used in the implementation of the embodiment of Figure 2; and

Figure 5 illustrates trip curves of trip time versus multiple of rated load current for a conventional Class 20 overload and an overload relay protection circuit in accordance with the invention.

## DESCRIPTION OF THE PREFERRED EMBODIMENT

As employed herein, the term "signal" shall expressly include, but not be limited to any input or output utilized for control and/or monitoring such as, for example, analog signals, digital signals, command signals, status signals, discrete signals, serial signals or serial messages.

The invention has particular application and will be described in connection with a motor starter and, more particularly, a motor starter including an overload relay protection circuit and three-phase contactor contacts. However, it will be realized by those skilled in the art that the invention has broad application for controlling one or more contacts in electrical switching devices, such as circuit switching devices and circuit interrupters including circuit breakers, contactors, motor controllers, lighting controllers and other load controllers, utilized in other applications.

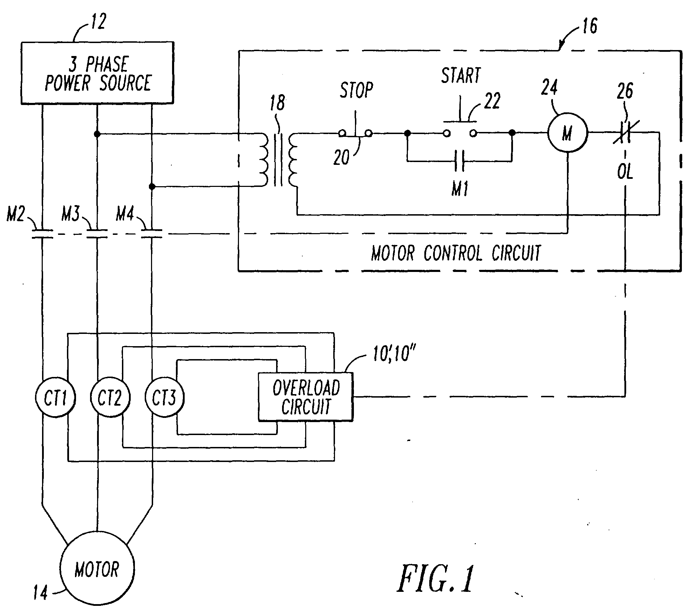

A three-phase power and control system is shown in Figure 1. The system includes an overload relay protection circuit 10' incorporating the features of the invention. An overload relay protection circuit 10, similar to the circuit 10', and reference numbers 12 through 62 employed herein are disclosed in U.S. Patent No. 5,222,009, which is hereby incorporated by reference. A three-phase power source 12 is coupled through contactor contacts M2,M3,M4 and sensors, such as respective current transformers CT1,CT2,CT3, to a three-phase motor 14 in typical manner. Either external or internal current transformers may be used. A single-phase start and control circuit 16 is used to control the supply of power to the motor 14. Generally, a step down transformer 18 is used to reduce the power (typically 208-600 volts AC) from two phases of the power source 12 to 120 volts AC. A normally closed STOP button 20 is provided to break the circuit and manually shut off the power supply to the motor 14. To start up, the normally open START button 22 is closed, energizing the coil (M) 24 and closing contacts M1,M2,M3,M4. Contact M1 interlocks the control circuit 16 in order that contacts M2,M3,M4 stay energized unless the control circuit 16 is opened at the STOP button 20 or is opened by the opening of the normally closed overload relay contact (OL) 26.

The overload relay circuit 10′ of the invention is connected to the secondaries of the three current transformers CT1,CT2,CT3 for monitoring or sensing the electrical load current flowing between the power source 12 and the motor 14, to provide sensed current values therefrom, and to detect the presence of an overload condition. When a predetermined overload condition is present, the overload relay circuit 10′ is activated to open the contact 26 and shut down the power supply to the motor 14. After certain events have occurred, the contact 26 will reclose to permit starting the motor 14.

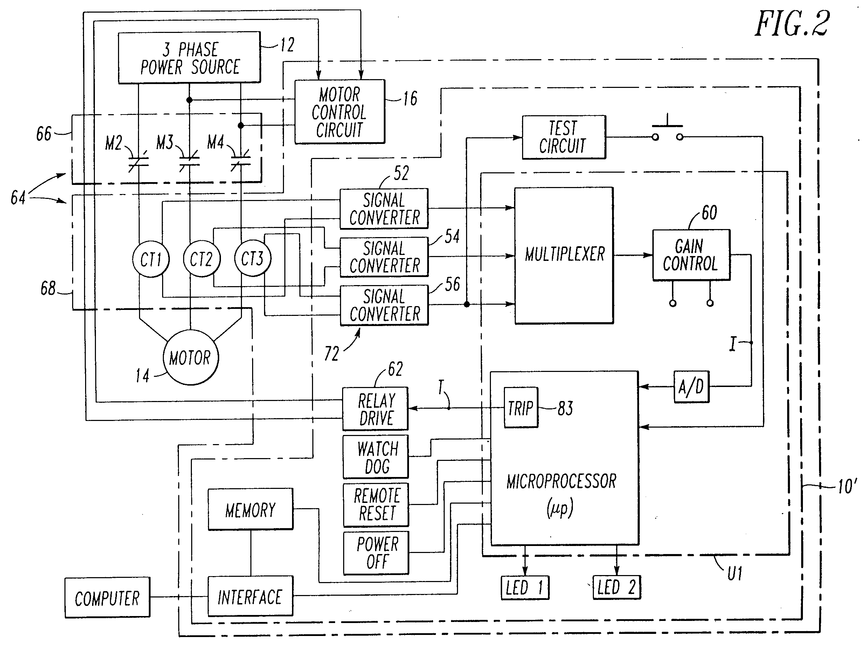

An expanded functional block diagram of the overload relay circuit 10′ is shown in Figure 2. Signal converters 52,54,56 are provided and are coupled to the current transformers CT1,CT2,CT3, respectively. The converters 52,54,56 convert the current at each phase of the motor 14 into a suitable filtered (AC) signal for input to the multiplexer of integrated circuit U1. The multiplexer continuously sequentially scans the outputs of the converters 52,54,56 to monitor the load level on each of the three phases of the windings (not shown) of the motor 14. This permits monitoring of each of the three power phases. The three monitored signals produced by the converters 52,54,56 are input to the multiplexer where they are combined to produce a single output which preserves the independent identity of each of the three inputs. This combined signal is input to a gain control circuit 60 where the current gain range can be set in accordance with the load specifications for each particular motor 14. The analog output $I$ of the gain control circuit 60 is presented to the microprocessor ($\mu$P) through the analog-to-digital (A/D) converter of integrated circuit U1.

If the overload condition is present for the defined period of time, the trip sequence is initiated, and the trip signal $T$ is output by the microprocessor of integrated circuit U1 to a relay drive circuit 62. The relay drive circuit 62 is coupled directly to the overload contact 26 of Figure 1. When the trip signal $T$ is present, the normally closed contact 26 is opened, the coil 24 is deenergized, and the motor 14 is shut down. Those skilled in the art will appreciate that other embodiments of the relay drive circuit 62 and the overload contact 26 are possible such as a drive circuit for a contactor coil which initiates movement of an armature and closure of the separable contacts M2,M3,M4. For example, such other embodiments may include an AC coil connected to an AC power source through a suitable AC switch such as a triac; or a DC coil connected to DC power derived from an AC power source by a diode bridge, in which a suitable current regulator controls DC current flowing through the DC coil with a suitable DC switch such as a field effect transistor.

In the exemplary embodiment of Figure 2, a motor starter 64 includes an electrical contactor 66 having the separable contacts M2,M3,M4 for switching an electrical current flowing between the power source 12 and the motor 14, and an overload relay 68. The coil 24 (shown in Figure 1) of the motor control circuit 16 forms an operating circuit which is responsive to the two states of the trip signal $T$ of the overload relay circuit 10′ for moving the separable contacts M2,M3,M4 between the closed position of Figure 2 and the open position of Figure 1, thereby opening and closing such separable contacts.

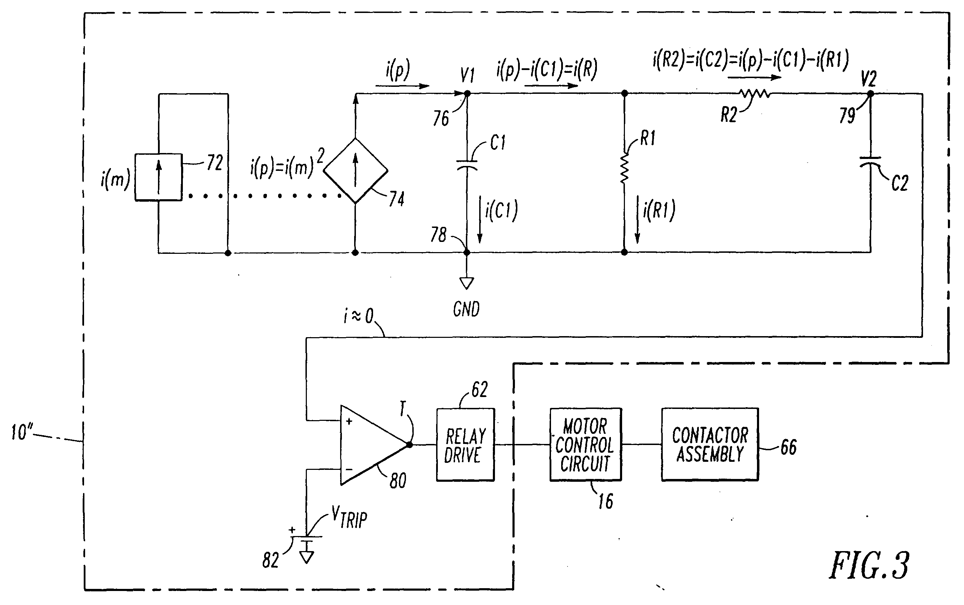

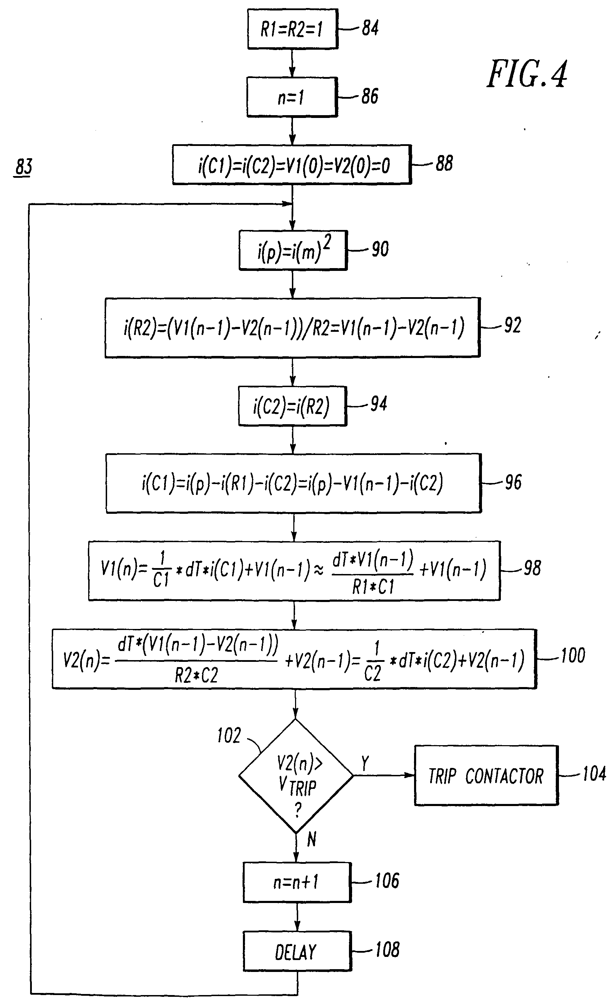

As explained in greater detail below in connection with Figures 3 and 4, the respective overload relay circuits 10″ and 10′ generate the trip signal $T$ as a two time constant $I^2t$ function of the sensed current value $I$ and time $t$. In the embodiment of Figures 2 and 4, the overload relay circuit 10′ is implemented with a digital circuit employing a processor such as the microcontroller or microprocessor. Alternatively, an analog circuit 10″ may be employed as shown in Figure 3.

Referring to Figure 3, the overload relay protection analog circuit 10″ embodiment is illustrated, although the invention is applicable to a variety of different embodiments such as the processor-based digital circuit 10′ embodiment of Figure 2. A sensed analog current value $i(m)$ (i.e., $I$) is suitably derived from one or more current sensors 72 such as the current transformers CT1,CT2,CT3 of Figure 1. A squaring circuit 74 provides an analog squared current value $i(p)$ from the square of the analog sensed current value $i(m)$. A thermal mass is represented by a capacitor C1 and a dissipation term is represented by a resistor R1 which shunts the capacitor C1. Capacitor C1 is charged by the analog squared current value $i(p)$ and is discharged, in part, by the resistor R1. The analog squared current value $i(p)$ divides into analog capacitor current $i(C1)$ in capacitor C1 and analog resistor current $i(R) = i(p) - i(C1)$ which, in turn, divides between resistors R1 and R2.

The capacitor C1 is charged by the analog capacitor current $i(C1)$ to form a voltage $V1$ at node 76 as referenced to ground GND at node 78. The analog resistor current $i(R) = i(p) - i(C1)$ divides into analog resistor current $i(R1)$ in resistor R1 and analog resistor current $i(R2) = i(C2) = i(p) - i(C1) - i(R1)$ in the series combination of resistor R2 and capacitor C2. This series combination of the resistor R2 and capacitor C2 also discharges the capacitor C1. The capacitor C2 is charged by the analog capacitor current $i(C2)$ to form an analog thermal protection voltage $V2$ at node 79 as referenced to ground GND at node 78.

A comparator 80 compares the analog thermal protection voltage $V2$ at node 79 with an analog predetermined reference voltage $V_{TRIP}$ from a voltage reference 82. In the exemplary embodiment, the comparator 80 generates the trip signal $T$ when the analog thermal protection voltage $V2$ is about greater than the analog predetermined reference voltage $V_{TRIP}$

Figure 4 is a flowchart of a suitable overload relay routine 83 used by the microprocessor of integrated circuit U1 to trip the separable contacts M2,M3,M4 of Figure 2. In the digital circuit 10′, as implemented by such microprocessor, software controls the thermal model, which mimics the analog thermal model of Figure 3. In the routine 83, the thermal masses (*i.e.*, capacitors C1 and C2) are represented by integration terms. The digital values employed in Figure 4 are analogous to the analog values of Figure 3 and, hence, similar labels are employed for the analog values of Figure 3 and the digital values of Figure 4. Also, for convenience of solution by the microprocessor, in Figure 4, the digital values of the resistors R1,R2 of Figure 3 are preferably set to one ohm at step 84. In this manner, using the well-known equation $V = IR$, the current in the resistors R1,R2 may be readily obtained from the voltage across such resistors. As explained in greater detail below, the routine 83 generates the trip signal $T$ as a function of the sensed current value $I$, a first time constant $\tau_1$ and a second time constant $\tau_2$.

At step 86 an integer $n$ is initialized to one. Then, at step 88, digital values $i(C1)$ and $i(C2)$ are initialized to zero. Also, digital value $V1(0)$ and digital thermal protection value $V2(0)$ at time 0 (*i.e.*, 0 = $n$-1) are initialized to zero. At step 90, a digital squared value $i(p)$ is obtained by squaring the digital sensed current value $i(m)$ (*i.e.*, $I$) which is suitably derived from the current transformers CT1,CT2,CT3 of Figure 2. Next, at step 92, the digital value $i(R2)$ is calculated from Equation 1:

$$i(R2) = \frac{V1(n\text{-}1) - V2(n\text{-}1)}{R2} = V1(n\text{-}1) - V2(n\text{-}1) \qquad \text{Eq. (1)}$$

Then, at step 94, the digital value $i(C2)$ is set equal to the digital value $i(R2)$ of step 92. Next, at step 96, the digital value $i(C1)$ is calculated from Equation 2:

$$i(C1) = i(p) - i(R1) - i(C2) = i(p) - V1(n\text{-}1) - i(C2) \qquad \text{Eq. (2)}$$

Then, at step 98, the digital value $V1(n)$ is calculated from Equation 3:

$$V1(n) = dV1(n) + V1(n\text{-}1) = \frac{dT*i(C1)}{C1} + V1(n\text{-}1) \approx \frac{dT*V1(n\text{-}1)}{R1*C1} + V1(n\text{-}1) \qquad \text{Eq. (3)}$$

wherein:

$$dV1(n) = V1(n) - V1(n\text{-}1) = \Delta V1$$

In the exemplary embodiment of Figure 4, the third expression of Equation 3 is preferably employed, although the fourth (approximate) expression may also be employed. Next, at step 100, the digital thermal protection value $V2(n)$ is calculated from Equation 4:

$$V2(n) = dV2(n) + V2(n\text{-}1) = \frac{dT*(V1(n\text{-}1) - V2(n\text{-}1))}{R2*C2} + V2(n\text{-}1) = \frac{dT*i(C2)}{C2} + V2(n\text{-}1) \qquad \text{Eq. (4)}$$

Step 98 calculates a new digital value $V1(n)$ from the previously calculated value $V1(n\text{-}1)$ plus a loop time $dT$ times digital value $i(C1)$ divided by C1. Since the digital value $i(C1)$ is a function of the square of the sensed current value (I), the intermediate value $V1$ is increased as a function of the digital squared value $i(p)$ and C1. Alternatively, step 98 may be approximated by the previously calculated value $V1(n\text{-}1)$ plus a loop time $dT$ times digital value $V1(n\text{-}1)$ divided by the first time constant $\tau_1$ = R1*C1 , with R1 equal to one ohm. In this case, the intermediate value $V1$ is increased as a function of the time constant $\tau_1$ = R1*C1 = C1 .

Step 100 similarly calculates a new digital thermal protection value $V2(n)$ from the previously calculated value $V2(n\text{-}1)$ plus a loop time $dT$ times digital value $i(C2)$ divided by C2. The digital thermal protection value V2 is increased as a function of the intermediate value $V1$ (as discussed with digital value $i(C2)$ calculated at steps 92 and 94) and capacitor C2. Step 100 may equivalently calculate the new digital thermal protection value $V2(n)$ from the previously calculated value $V2(n\text{-}1)$ plus a loop time $dT$ divided by the second time constant $\tau_2$ = R2*C2 , with R2 equal to one ohm, times the difference between digital value $V1(n\text{-}1)$ and digital value $V2(n\text{-}1)$. In this case, the digital thermal protection value $V2$ is increased as a function of the intermediate value $V1$ and the time constant $\tau_2$.

At step 102, the newly calculated digital thermal protection value $V2(n)$ is compared with a digital predetermined trip value $V_{TRIP}$. If the newly calculated digital thermal protection value $V2(n)$ is greater than the digital predetermined trip value $V_{TRIP}$, then, at step 104, the contactor 66 is opened by setting the trip signal $T$ of Figure 2 to the appropriate state. Otherwise, at step 106, the contactor 66 remains closed and the integer $n$ is incremented. After a suitable delay, at step 108, the routine repeats at step 90. The subsequent iteration of steps 90,92,94,96,98,100 calculates the next digital thermal protection value $V2(n+1)$. For purposes of illustration, but not of limitation, in the exemplary embodiment, the execution time of the loop formed by steps 90 through 108 is about 1 mS, $\tau_1$ is about 500 S, and $\tau_2$ is about 10 S, although the invention is applicable to a wide range of such times.

In the analog and digital solutions of respective Figures 3 and 4, the resistor or thermal dissipation terms are typically represented by proportional terms. Although various implementation methods are possible, the ultimate solution revolves around this basic model in which an intermediate value $V1$ is obtained as a function of a first, relatively long time constant $\tau_1$, and a digital thermal protection value $V2$ is obtained as a function of a second, relatively short time constant $\tau_2$.

The exemplary overload relay 64 utilizes a four-term (*i.e.*, R1,C1,R2,C2) thermal model which more closely models the required motor protection curve for a motor such as a European Design N motor or a Design E motor. These four terms combine to form a circuit with two thermal time constants $\tau_1,\tau_2$. As best seen from the analog model of Figure 3, the two time constant circuit 10″ utilizes the thermal protection voltage $V2$ developed across capacitor C2 to indicate the critical rise in temperature of the motor 14 of Figure 1. Since the European Design N or Design E motors are more complex than a single thermal mass term and a single thermal dissipation term, this two time constant model more closely models the true thermal impedance of such motors. Furthermore, the two time constant model is applicable to any motor which requires a motor protection curve having two time constants.

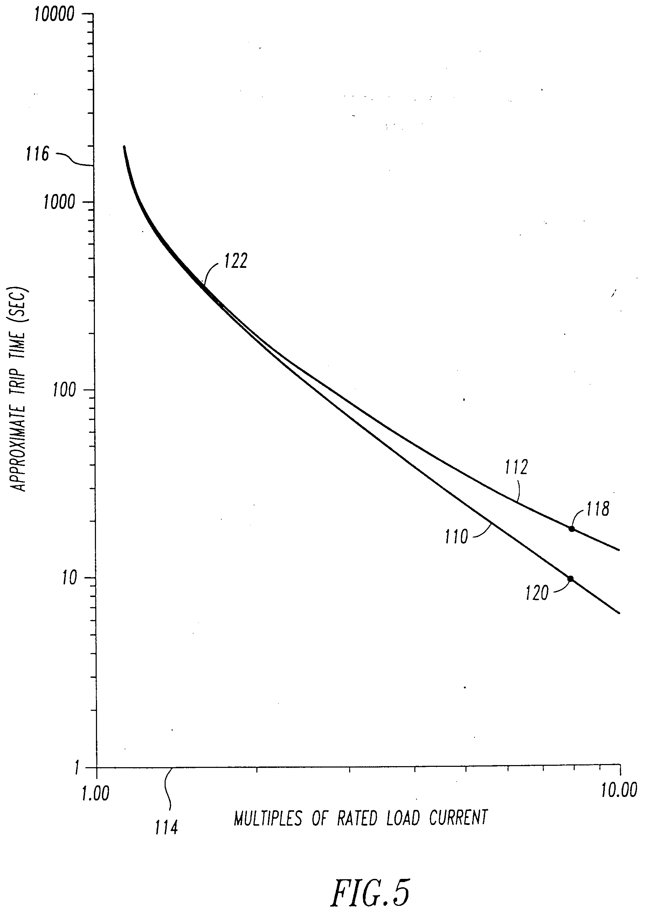

Figure 5 illustrates a trip curve 110 of a conventional Class 20 overload and a trip curve 112 of the exemplary overload relay protection circuits 10′, 10″ for a Design E motor. The horizontal X-axis 114 represents multiples of rated load current and the vertical Y-axis 116 represents approximate trip time (S). The trip curve 110 is a conventional first order trip curve which is a function of the sensed current value (I), a single time constant and time. The trip curve 112, as generated by the analog circuit 10″ of Figure 3 or the routine 83 of Figure 4, is a second order trip curve and is a function of the sensed current value (I), a first time constant (*e.g.*, $\tau_1$), a second time constant (*e.g.*, $\tau_2$) and time.

During periods of heavy overload, such as starting, the current for the exemplary Design E motor will be approximately 800% (*e.g.*, at point 118) of the rated load current. For this condition with a cold motor, the additional time constant ($\tau_2$) safely provides typically 183% times a current for a typical Class 20 overload as shown at point 120 of conventional trip curve 110. In other words, the design E trip curve 112 provides about 335% times the $I^2t$ of the conventional Class 20 overload trip curve 110. For hot starting conditions (not shown in Figure 5) at approximately 800% of rated load current, the trip curve, as generated by the analog circuit 10″ of Figure 3 or the routine 83 of Figure 4, safely provides about 357% times the current for the conventional Class 20 overload. This is equivalent to about 1274% times the Class 20 hot $I^2t$. At relatively light overload conditions, as seen at portion 122 of the trip curve 112, the additional time constant ($\tau_2$) has little or no effect with respect to the standard Class 20 $I^2t$ value.

Although exemplary digital 10′ and analog 10″ circuits are disclosed herein, it will be appreciated by those skilled in the art that other equivalent analog and/or digital circuit solutions are possible.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the appended claims and any and all equivalents thereof.

## Claims

1. A motor starts (64) for a electrical circuit including a power source (12) ad a load (14), said motor starter (64) comprising:

   separable contact means (M2,M3,M4) for switching an electrical current flowing between said power source (12) and said load (14);
   operating means (16) responsive to a trip signal (T) for opening and closing said separable contact means (M2,M3,M4);
   means (CT1,CT2,CT3;72) for sensing the electrical current flowing between said power source (12) and said load (14) and providing a sensed current value (I) therefrom; and
   overload relay means (U1,83;10″) for generating the trip signal (T) as a function of the sensed current value (I), a first time constant ($\tau_1$) and a second time constant ($\tau_2$).

2. The motor starter (64) as recited in Claim 1 wherein said overload relay means (U1,83;10″) includes means (90,92,94,96,98,100,102,104;10″) for generating the trip signal (T) as a function of the sensed current value (I) and time.

3. The motor starter (64) as recited in Claim 1 wherein said overload relay means (U1,83;10″) includes means (90,92,94,96,98,100,102,104;10") for generating the trip signal (T) as an $I^2t$ function of the sensed current value (I).

4. The motor starter (64) as recited in Claim 3 wherein said means (90,92,94,96,98,100,102,104;10") for generating the trip signal (T) as an $I^2t$ function of the sensed current value (I) includes a analog circuit (10").

5. The motor starter (64) as recited in Claim 3 wherein said overload relay means (U1,83;10") further includes processor means (U1); and wherein said means (90,92,94,96,98,100,102,104;10") for generating the trip signal (T) as an $I^2t$ function of the sensed current value (I) is a routine (83) executed by said processor means (U1).

6. The motor starter (64) as recited in Claim 2 wherein said means (90,92,94,96,98,100,102,104;10") for generating the trip signal (T) as a function of the sensed current value (I) and time comprises:

means (90,96,98) generating an intermediate signal (V1) as a function of the first time constant ($\tau_1$);
means (92,94,100) generating a thermal protection signal (V2) as a function of the intermediate signal (V1) and the second time constant ($\tau_2$);
means (102) for comparing the thermal protection signal (V2) with a predetermined signal (V$_{TRIP}$); and
means (104) generating the trip signal (T) when the thermal protection signal (V2) is about greater than the predetermined signal (V$_{TRIP}$).

7. The motor starter (64) as recited in Claim 2 wherein said means (90,92,94,96,98,100,102,104;10") for generating the trip signal (T) as a function of the sensed current value (I) and time comprises:

means (74) for generating a squared current (i(p)) as a function of the square of the sensed current value (I);
first capacitor means (C1) for charging by the squared current (i(p));
first resistor means (R1) for discharging said first capacitor means (C1);
second resistor means (R2);
second capacitor means (C2) in series with said second resistor means (R2), the series combination of said second resistor means (R2) and said second capacitor means (C2) also for discharging said first capacitor means (C1), said second capacitor means (C2) having a thermal protection voltage (V2) thereacross; and
means (80,82) generating the trip signal (T) when the thermal protection voltage (V2) is about greater than a predetermined voltage (V$_{TRIP}$).

8. The motor starter (64) as recited in Claim 1 wherein said load (14) is a Design E motor (14).

9. The motor starter (64) as recited in Claim 1 wherein said load (14) is a Design N motor (14).

10. A motor starter (64) for an electrical circuit including a power source (12) and a load (14), said motor starter (64) comprising:

electrical contactor means (66) including separable contact means (M2,M3,M4) for switching an electrical current flowing between said power source (12) and said load (14), and operating means (16) responsive to a trip signal (T) for opening and closing said separable contact means (M2,M3,M4);
means (CT1,CT2,CT3;72) for sensing the electrical current flowing between said power source (12) and said load (14) and providing a sensed current value (I) therefrom; and
overload relay means (U1,83;10") for generating the trip signal (T) as a function of the sensed current value (I), a first time constant ($\tau_1$) and a second time constant ($\tau_2$).

11. The motor starter (64) as recited in Claim 10 wherein said overload relay means (U1,83;10") for generating the trip signal (T) includes a microcontroller (U1).

12. The motor starter (64) as recited in Claim 10 wherein said overload relay means (U1,83;10") for generating the trip signal (T) includes a digital circuit (U1).

13. The motor starter (64) as recited in Claim 10 wherein said overload relay means (U1,83;10") for generating the trip signal (T) includes an analog circuit (10").

14. The motor starter (64) as recited in Claim 11 wherein said overload relay means (U1,83;10") comprises:

means (90,96,98) for increasing an intermediate signal (V1) as a function of the first time constant ($\tau_1$);

means (92,94,100) for increasing a thermal protection signal (V2) as a function of the intermediate signal (V1) and the second time constant ($\tau_2$);

means (102) for comparing the thermal protection signal (V2) with a predetermined signal ($V_{TRIP}$); and

means (104) generating the trip signal (T) when the thermal protection signal (V2) is about greater than the predetermined signal ($V_{TRIP}$).

15. An electrical switching apparatus (64) for an electrical circuit including a power source (12) and a load (14), said electrical switching apparatus (64) comprising:

separable contact means (M2,M3,M4) for switching an electrical current flowing between said power source (12) and said load (14), said separable contact means (M2,M3,M4) having a closed position and an open position;

means (16) responsive to a trip signal (T) for moving said separable contact means (M2,M3,M4) from the closed position to the open position;

means (CT1,CT2,CT3;72) for sensing the electrical current flowing between said power source (12) and said load (14) and providing a sensed current value (I) therefrom; and

means (U1,83;10") for generating the trip signal (T) as a function of the sensed current value (I), a first time constant ($\tau_1$) and a second time constant ($\tau_2$).

16. The electrical switching apparatus (64) as recited in Claim 15 wherein said means (U1,83;10") for generating the trip signal (T) is a processor means (U1).

17. The electrical switching apparatus (64) as recited in Claim 15 wherein said means (U1,83;10") for generating the trip signal (T) is a digital circuit (U1).

18. The electrical switching apparatus (64) as recited in Claim 15 wherein said means (U1,83;10") for generating the trip signal (T) includes means (83) generating a second order trip curve (112) as a function of the sensed current value (I), the first time constant ($\tau_1$), the second time constant ($\tau_2$) and time.

19. The electrical switching apparatus (64) as recited in Claim 15 wherein said means (U1,83;10") for generating the trip signal (T) comprises:

means (90,96,98) generating an intermediate signal (V1) as a function of the first time constant ($\tau_1$);

means (92,94,100) generating a thermal protection signal (V2) as a function of the intermediate signal (V1) and the second time constant ($\tau_2$);

means(102) for comparing the thermal protection signal (V2) with a predetermined signal ($V_{TRIP}$); and

means (104) generating the trip signal (T) when the thermal protection signal (V2) is about greater than the predetermined signal ($V_{TRIP}$).

20. The electrical switching apparatus (64) as recited in Claim 15 wherein said means (U1,83;10") for generating the trip signal (T) comprises:

means (74) for generating a squared current (i(p)) as a function of the square of the sensed current value (I);

first capacitor means (C1) for charging by the squared current (i(p));

first resistor means (R1) for discharging said first capacitor means (C1);

second resistor means (R2);

second capacitor means (C2) in series with said second resistor means (R2), the series combination of said second resistor means (R2) and said second capacitor means (C2) also for discharging said first capacitor means (C1), said second capacitor means (C2) having a thermal protection voltage (V2) thereacross; and

means (80,82) generating the trip signal (T) when the thermal protection voltage (V2) is about greater than a predetermined voltage ($V_{TRIP}$).

FIG.1

FIG.2

EP 0 847 122 A2

FIG.3

*FIG.4*

$$R1=R2=1 \quad -84$$

$$n=1 \quad -86$$

*83*

$$i(C1)=i(C2)=V1(0)=V2(0)=0 \quad -88$$

$$i(p)=i(m)^2 \quad -90$$

$$i(R2)=(V1(n-1)-V2(n-1))/R2=V1(n-1)-V2(n-1) \quad -92$$

$$i(C2)=i(R2) \quad -94$$

$$i(C1)=i(p)-i(R1)-i(C2)=i(p)-V1(n-1)-i(C2) \quad -96$$

$$V1(n)=\frac{1}{C1}*dT*i(C1)+V1(n-1)\approx\frac{dT*V1(n-1)}{R1*C1}+V1(n-1) \quad -98$$

$$V2(n)=\frac{dT*(V1(n-1)-V2(n-1))}{R2*C2}+V2(n-1)=\frac{1}{C2}*dT*i(C2)+V2(n-1) \quad -100$$

$$102 \quad V2(n)>V_{TRIP}? \quad \xrightarrow{Y} \quad TRIP \; CONTACTOR \quad -104$$

N

$$n=n+1 \quad -106$$

$$DELAY \quad -108$$

*FIG.5*